# EUROPEAN PATENT SPECIFICATION

(11) **EP 2 486 889 B1**
(45) Date of publication and mention of the grant of the patent: **12.08.2015**
(21) Application number: 10776112.4
(22) Date of filing: 22.09.2010
(51) Int. Cl.: A61C 8/00

(54) **ADDITION FOR PRODUCING THE INTERNAL STRUCTURE OF DENTAL PROSTHESES**
ADITAMENTO PARA LA CONFECCIÓN DE LA ESTRUCTURA INTERNA DE PRÓTESIS DENTALES
COMPLÉMENT POUR LA CONFECTION DE LA STRUCTURE INTERNE DE PROTHÈSES DENTAIRES

(30) Priority: 08.10.2009 ES 200930814
(43) Date of publication of application: 15.08.2012
(73) Proprietor: Farré Berga, Ramon, 25001 Lleida (ES); Farré Berga, Oriol, 25001 Lleida (ES)
(72) Inventor: FARRE BERGA, Ramon, E-25001 Lleida (ES)
(74) Representative: Carvajal y Urquijo, Isabel
(86) International application number: PCT/ES2010/070612
(87) International publication number: WO 2011/042583

(56) References cited:
- WO-A1-2008/051163
- WO-A2-99/16293
- US-A- 5 069 622
- US-A1- 2001 053 512

## Description

### Object of the invention

The present invention refers to an abutment to manufacture the internal structure of dental prostheses of the type which are fixed on dental implants or transepithelial pillars through the use of prosthetic retention screws.

The present invention has been specifically designed to optimize the manufacturing processes of this type of prosthesis and standardize the necessary prosthetic parts, so that a reduced number thereof enables to offer a solution to a great number of different rehabilitations. Another object of the present invention of equal importance is to guarantee a better fit and sealing between the prosthetic parts themselves and between them and the implants or transepithelial pillars, in order to increase long-term stability of prostheses, adjacent oral tissues and patient's comfort.

### Background of the invention

The manufacturing of the internal structure of a screwed dental prosthesis represents one of the most delicate and complex tasks within any procedure to make this type of prosthesis. The internal structure of the prosthesis not only constitutes the body on which the prosthesis is modelled but it also enables it to fit with the implant head or with the transepithelial pillar and enables the insertion and later handling of the prosthetic retention screw.

In this sense the internal structure of a prosthesis requires a very accurate finish so that it guarantees an appropriate connection with the implant or with the transepithelial pillar and an orifice which facilitates the insertion and later handling of the prosthetic retention screw. Said orifice is also highly important from an esthetic and functional point of view since it is compromised by the inclinations of the implants once inserted in the patient's bone.

Nowadays, there are different techniques for the manufacturing of the internal structure of screwed dental prostheses that allow compensating implant inclinations.

One of the most widely used techniques consists of making an intermediate angular pillar on the implant head the geometry of which enables to correct the inclination of said implant. An example of this technique is shown in the patent document US 5,116,225. An intermediate angular pillar is shown therein, which is formed by four components, which can be used in implants provided with an hexagonal connection head of the internal or external type. The first two components are fixed to the implant head by means of an auxiliary screw. The first of the components presents a first connection with the implant head and a second connection with external pentagonal contour which fits with the internal pentagonal contour, having twelve sides, of the second component. In turn, the second component has an external thread to receive the third component. Thanks to the configuration described so far, said third component, once threaded, can adopt a particular number of fixed positions, with respect to the horizontal plane defined by the implant head, by only varying the possible connection positions between the two first components. The third component comprises the prosthetic retention screw fixing means. The geometry of the third component determines the inclination, with respect to the longitudinal axis of the implant, of the orifice through which the prosthetic retention screw is inserted. In order to facilitate the formation of said orifice, a fourth component is used which is placed on the third component and takes the inclination of the latter one. The fourth component acts as a straight coping and once the prosthesis is manufactured it is housed therein.

This type of technique, shown as an example through the previous case, has important drawbacks. One of the most important ones is the great number of components needed to make the internal structure of the prosthesis. This not only implies higher cost but it also excessively complicates the dentist's and/or dental technician's tasks. Another drawback is that the number of corrections that can be obtained are limited by the geometrical characteristics of its components. Finally, its use is only feasible for a reduced number of implants.

Another of the techniques used to make the internal structure of screwed dental prostheses allows the partial reduction of some of the drawbacks of the previous case, mainly as regards the reduction of elements, thanks to the use of a connection base to the implant and a straight coping. An example of this technique is shown in ES2278477. An abutment is shown therein -called dynamic pillar- which comprises a base which connects with the implant head and a straight coping coupled thereto through a ball joint. The coping can rotate on said joint according to the horizontal plane defined by it and pivot on it to form 0° - 25° angles between the coping and the base. Once the desired angle has been obtained the dental prosthesis is modelled on the base-coping assembly and it is cast.

This technique, in spite of the reduction of components, also has important drawbacks. Specifically, one of the main inconveniences of this abutment is that the external surface on which the prosthesis is modelled is not even, on the contrary, it has a very rugged external surface which originates a plurality of holes and notches around the points where the base and coping articulate. Said holes and notches are very difficult to fill in with the modelling material, which frequently leads to an inappropriate filling and the existence of small air chambers. Another of the inconveniences is directly associated to the way in which the dentist and/or dental technician work. Specifically, once the prosthesis modelling has been completed, generally on a master cast which is a duplicate of the patient's implants, the base can no longer be separated from the coping, unless said modelling is cut or broken. As a result, during adjustment and correction in mouth tasks, it is necessary to unscrew the entire prosthesis to extract it from the master cast and screw it in the patient's mouth to verify its fit and do the necessary later corrections. Another inconvenience associated to this last aspect is that it is impossible to separate the base from the coping once the prosthesis has been modelled, and as long as metallic bases are used, during the prosthesis casting process there is unavoidably an over-casting of the base. This affects the prosthesis final finish, as dimensional changes frequently occur as a result of an incorrect fit with the implant or transepithelial pillar, besides there being a wide and rugged surface of the over-cast part which needs to be adjusted and polished with optical microscopy. Another problem of over-casting is the frequent appearance of pores.

WO2008051163 shows a dental system in which the orifice that allows access to the retention screw is obtained through different techniques, mainly based on the computerized machining through milling or drilling. The dental system uses a straight bore angle connector, a bore angle member and a distance member to make the prosthesis. The bore angle member and the bore angle connector are configured to pivot between each other both in the horizontal and vertical planes. In turn, the distance member constitutes an additional element which serves to delimit the angle in the vertical plane between the bore angle connector and the bore angle member, once the orientation thereof in the horizontal plane has been determined. These elements are fixed to one another in order to conveniently scan them after modelling the internal prosthetic structure. However, once the elements are fixed, they cannot be separated again, unless the fixing means (wax, plastic, tape or glue) that keep them joined are destroyed. Therefore, it is not possible to make passive adjustments of the prosthesis in the patient's mouth. The external surface forming the bore angle connector, bore angle member and distance member has hard-to-access holes or notches which hinder the appropriate modelling of the prosthesis.

The present invention satisfactorily solves the aforementioned problems by means of an abutment which reduces even more the number of elements necessary to make the internal structure of a screwed prosthesis simplifying manufacturing tasks, with a more precise finish, and also, being compatible with a great variety of different implants and transepithelial pillars. Said abutment comprises a curved coping and a base which connects to the implant, which is integral to or detachable from said coping at all times, so that the external surface of the base-coping assembly which is in contact with the prosthesis is free of holes and/or notches.

### Description of the invention

In order to solve the aforementioned problems, the abutment for the manufacturing of the internal structure of dental prostheses, of the type which are fixed on dental implants or transepithelial pillars through the use of screws, has two functional parts constituted by:
- a base whose lower face is connectable with the implant or transepithelial pillar head and in whose interior there are housing means for the screw head; and
- a coping joined to the base through which the prosthesis orifice is established allowing access to the screw head.

The coping in turn comprises:
- a first section to connect with the base;
- a second curved section which connects with the first section; and
- a third straight section which connects with the second section, whose inclination angle *β* with respect to the base is determined by the curvature of the second section.

Wherein, the assembly formed by the base and the coping defines an external surface in contact with the dental prosthesis which has a uniform continuity. The external surface of the base-coping assembly, represented by its three sections, is defined as all of that on which the prosthesis is modelled. That excludes the surface of connection with the implant head, be it either external or internal, and generally any internal surface. Also, an external surface with uniform continuity has no hard-to-access holes or notches which hinder the appropriate prosthesis modelling. In this sense, there are excluded in those embodiments where there may appear, joining edges between the base and coping, soft joining plane changes between said elements and any small perimeter notch on the base. Reference will be made to all of them hereinafter as they appear in each one of the embodiments of the present invention.

On the other hand, a very outstanding characteristic of the present invention is that the base and the coping can constitute two independent elements detachable from one another or they can be a single indivisible element. According to the first option, that is separable base and coping, the present invention provides for three preferred embodiments. According to the second option, where base and coping form a single indivisible element, the present invention provides for a fourth preferred embodiment.

According to a first embodiment, the first section of the coping constitutes a skirt that fits the surface of the external face of the base and wraps it in its perimeter. In this way the base is completely inside the coping and this enables the only contact surface with the prosthesis to be on the coping and also to be completely smooth. Thanks to that, important advantages are attained, specially once the prosthesis has been modelled. One of them enables to handle the prosthesis without unscrewing the bases of the work model, which considerably reduces the time needed for adjustments and corrections. Another advantage is that it is possible to cast the prosthesis without the bases, so that if they are metallic the over-casting thereof is avoided, gaining precision in the connections between the base and the retention screw and between the base and the implant, besides preventing the creation of pores.

In order to allow the abutment of the coping to the base and its later detachment from it, the first section has retention means in its internal face which work collaboratively with reception means arranged in the external face of the base. The retention means and the reception means allow the rotation of the coping on the base according to the horizontal plane defined by the connection with the implant. There exist numerous ways to allow the joining and separation of both elements as well as the rotation of the coping, however, preferably the retention means comprise at least one protruding pivot arranged on the internal face of the first section, while the reception means comprise a notch arranged in its perimeter on the external face of the base on which the protruding pivot moves.

According to a second embodiment, the first section forms a funnel that fits the surface of the internal face of the base and wraps it in its perimeter. This embodiment enables to use the abutment of the present invention in implants of internal connection. Between the base and the coping there is a small union edge which does not affect in any way the maintenance of the uniform continuity of the external surface of the assembly. Neither does it affect the funnel-shaped configuration of the upper part, which produces a subtle change of the joining plane between said elements, as it is hidden within the connection of the base implant. That is, in both cases there is no difficulty in the appropriate modelling of the prosthesis.

According to a third embodiment, the first section forms a claw which is adapted to the screw head and which is delimited by the upper edge of the base in its perimeter. This embodiment enables to make the prosthesis through sintering or milling techniques through computer-aided design and computer-aided manufacturing (CAD-CAM) technology, without needing implant-specific software. The coping enables to scan, in the master cast, the path that the prosthetic screw will cover, which will be designed by computer means for its later sintering or milling. There exist several possibilities to configure the claw, which depend mainly on the type of head of the screw, so that there is both gripping and sealing with the perimeter contour of the base; however, the claw is preferably configured in a substantially hemispherical manner, allowing both the fixing thereto by means of a slight pressure and the rotation of said claw with respect to the screw. In the same way as in the previous case, between the base and the coping there is a small joining edge which does not affect in any way the maintenance of the uniform continuity of the external surface of the assembly. Likewise, even if there can be a completely smooth base, the same base as in the second embodiment is preferably used in order to attain the maximum standardization of the abutment components. In this later case, it is considered that the reception means thereof do not affect the maintenance of the uniform continuity of the external surface of the assembly.

According to a fourth embodiment, the base is integrated in the first section, so that the base and the coping constitute a single indivisible element, which reduces to the minimum the number of necessary components to make the structure. This is attained by forming said first section with the base shape. From this embodiment, many others can be obtained according to the type of base used, for example, using the bases of the first and second embodiments.

The abutment of the present invention, according to the aforementioned preferred embodiments, allows several possibilities as regards the material selection of its components. Preferably for the production of the coping there are used plastic materials compatible with the casting processes through the lost-wax casting technique. Metallic materials compatible with processes to make immediate or hybrid prosthesis through clinical cementation or rebasing can also be used. As regards the bases, these can also be calcinable compatible with casting processes through the lost-wax technique. However, to obtain the maximum benefits from the present invention as regards obtaining a high-quality finish, metallic materials such as Au, Ti, Cr-Ni, Cr-Co, Zr, among others are preferably used. Bases with Cr-Co alloys provide for their compatibility with prosthetic structures obtained through Cr-Co laser sintering and their bonding through welding.

As it has been indicated, the bases are compatible with most implants in the market, internal or external connection ones, and with transepithelial pillars. It is simply necessary to mill the interior face so that it adapts to the implant or transepithelial pillar head. However, it is necessary to highlight a particular embodiment of the base which has a circular connection whose internal wall is bevelled defining a conical surface which gradually closes between the connection opening and the housing means. This aspect is particularly interesting when the patient has two or more implants with external polygonal head which are divergent between each other, that is, which are not parallel. Nowadays, this problem is often solved through the use of conic transepithelial pillars. However, thanks to this connection the base can assume said correction functions, without needing the use of a transepithelial pillar.

### Brief description of the drawings

The following is a brief description of a series of drawings which will help understand the invention better relating to four embodiments of said invention which are presented as non-limiting examples thereof.
Figure 1 is an elevation view of the abutment of the present invention according to a first embodiment.
Figure 2 is a sectional elevation view of the abutment of the present invention according to a first embodiment.
Figure 3 is a perspective view of the coping according to a first embodiment.
Figure 4 is a perspective view of the base according to a first embodiment.
Figure 5 is an elevation view of the abutment of the present invention according to a second embodiment.
Figure 6 is a sectional elevation view of the abutment of the present invention according to a second embodiment.
Figure 7 is an elevation view of the abutment of the present invention according to a third embodiment.
Figure 8 is a sectional elevation view of the abutment of the present invention according to a third embodiment.
Figure 9 is an elevation view of the abutment of the present invention according to a fourth embodiment.
Figure 10 is a sectional elevation view of the abutment of the present invention according to a fourth embodiment.
Figure 11a is a perspective view of a base for the connection to an implant with hexagonal external head.
Figure 11b is an elevation view of a base for the connection to an implant with hexagonal external head.
Figure 11c is a sectional elevation view of a base for the connection to an implant with hexagonal external head.
Figure 12a is a perspective view of a rotating base for the connection to an implant with polygonal external head.
Figure 12b is an elevation view of a rotating base for the connection to an implant with polygonal external head.
Figure 12c is a sectional elevation view of a rotating base for the connection to an implant with polygonal external head.
Figure 13 is a perspective view of a prosthesis according to the second embodiment.

### Preferred embodiment of the invention

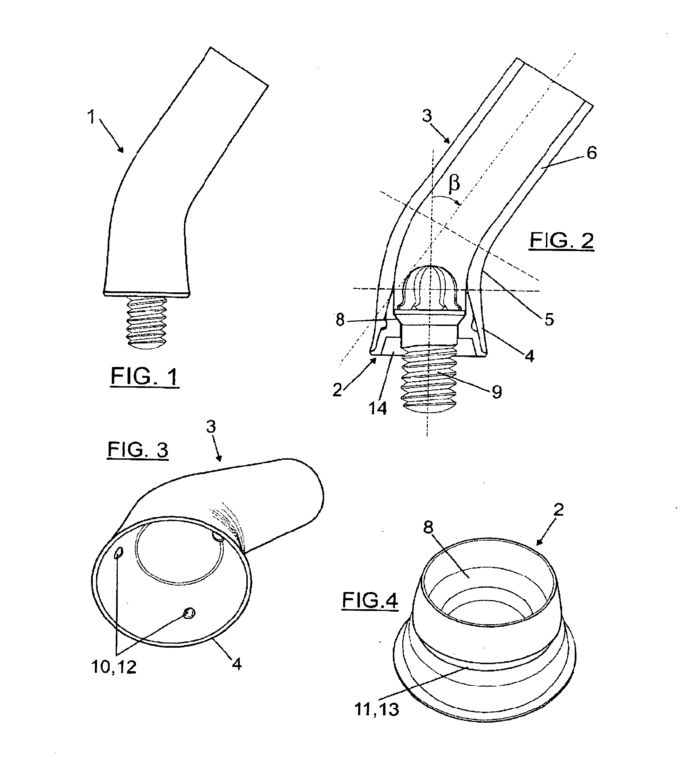

Figure 1 is an elevation view of the abutment (1) of the present invention according to a first embodiment in which it can be seen that the external surface in contact with the prosthesis has a uniform continuity, in this case being completely smooth.

Figure 2 is a sectional elevation view of the abutment (1) of the present invention according to a first embodiment. As it can be seen the abutment (1) has two functional parts constituted by:
- a base (2) whose lower face connects with the implant or transepithelial pillar head and in whose interior there are housing means (8) for the screw head (9); and
- a coping (3) joined to the base (2) through which the prosthesis orifice is established allowing access to the screw head (9).

As it can be seen the screw (9) has been represented completely to show its geometrical characteristics better. Particularly, it is a screw (9) whose head has a substantially spherical protuberance which allows its connection to the implant by means of the use of tools which can be manipulated with inclinations of up to 30° with respect to the longitudinal axis thereof, resulting in one of the most advanced techniques known in this field. In spite of this, although the screw (9) shown is specially suitable, the present invention can work with any other type of screw (9) which allows its manipulation with a particular inclination β, regardless of its geometrical configuration.

It can also be seen that the coping (3) comprises:
- a first section (4) to connect with the base (2);
- a second curved section (5) which connects with the first section (4); and
- a third straight section (6) which connects with the second section (5), whose inclination angle *β* with respect to the base (2) is determined by the curvature of the second section (5).

Figure 3 shows in a clear way that according to the first embodiment the first section (4) of the coping (3) constitutes a skirt that fits the surface of the external face of the base (2) and wraps it in its perimeter. In this way the base (2) is completely inside the coping (3) and this enables the only contact surface with the prosthesis to be on the coping (3) and also to be completely smooth.

In order to allow the joining of the coping (3) to the base (2) and its later separation from it, the first section (4) has retention means (10) in its internal face which work collaboratively with reception means (11) arranged in the external face of the base (2), figure 4. The retention means (10) and the reception means (11) allow the rotation of the coping (3) on the base (2) according to the horizontal plane defined by the connection with the implant. There exist numerous ways to allow the joining and separation of both elements as well as the rotation of the coping (3); however, the retention means (10) preferably comprise at least one protruding pivot (12) arranged on the internal face of the first section (4), while the reception means (11) comprise a notch (13) arranged in its perimeter on the external face of the base (2) on which the protruding pivot (12) moves.

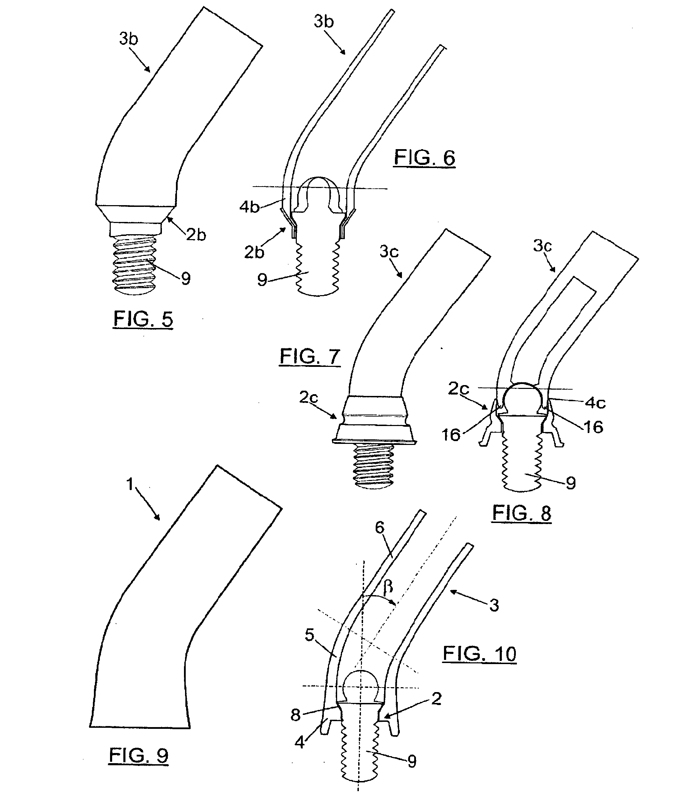

Figures 5 and 6 clearly show that according to the second embodiment the first section (4b) of the coping (3b) constitutes a funnel that fits the surface of the internal face of the base (2b) and wraps it in its perimeter.

Figures 7 and 8 clearly show that according to a third embodiment, the first section (4c) forms a claw (16) which is adapted to the screw (9) head and which is delimited in its perimeter by the upper edge of the base (2c). In order to standardize the components of the abutment (1), preferably the base (2c) is identical to the base (2); however, it can also be configured with a completely smooth internal surface. As regards the claw (16) there also exist different possibilities for its configuration, which mainly depend on the type of head of the screw (9), so that there is both gripping and sealing with the perimeter contour of the base (2c). However, as it has been indicated before, the screws (9) whose head has a substantially spherical protuberance are particularly suitable for the present invention. Therefore, the claw (16) is preferably configured with a substantially hemispherical shape, hollow inside, complementary to the screw (9) head, allowing both the fixing thereto by means of a slight pressure and the rotation of said claw (16) with respect to the screw (9).

Figures 9 and 10 clearly show that according to a fourth embodiment, the base (2) is integrated in the first section (4), so that the base (2) and the coping (3) constitute a single indivisible element. From this embodiment, many others can be obtained according to the type of base used, for example using base (2b) instead of (2).

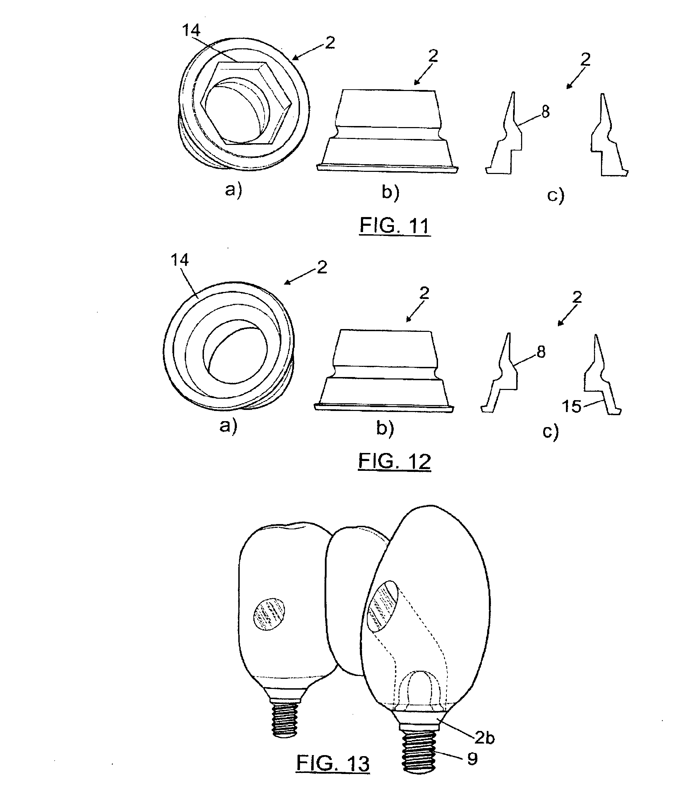

Figures 11a, 11b and 11c show several views of the base (2) for the connection to an implant with hexagonal external head.

Figures 12a, 12b and 12c show several views of a rotating base (2) for the connection to an implant with polygonal external head. This particular embodiment of the base (2) has a circular connection (14) whose internal wall is bevelled defining a conical surface (15) which gradually closes between the connection opening (14) and the housing means (8).

Figure 13 shows a perspective view of a prosthesis made according to the second embodiment. The path of the orifice granting access to the prosthetic retention screw (9) is shown in phantom lines.

## Claims

1. Abutment for the manufacturing of the internal structure of dental prostheses, said prosthesis being of the type which are fixed on dental implants or transepithelial pillars through the use of screws (9), where said abutment (1) has two functional parts constituted by:
a base (2, 2b, 2c) whose lower face is connectable with the implant or transepithelial pillar head and in whose interior there are housing means (8) for the screw head (9); and
a coping (3, 3b, 3c) joined to the base (2, 2b, 2c) through which the prosthesis orifice is established allowing access to the screw (9) head;
**characterized in that:**
the coping (3, 3b, 3c) comprises:
a first section (4, 4b, 4c) to connect with the base (2, 2b, 2c);
a second curved section (5) which connects with the first section (4, 4b, 4c); and
a third straight section (6) which connects with the second section (5), whose inclination angle *β* with respect to the base (2, 2b, 2c) is determined by the
curvature of the second section (5);
where:
the assembly formed by the base (2, 2b, 2c) and the coping (3, 3b, 3c) defines an external surface which has a uniform continuity.

2. Abutment (1) for the manufacturing of the internal structure of dental prostheses, according to claim 1 **characterized in that** the base (2, 2b, 2c) and the coping (3, 3b, 3c) constitute two independent elements detachable from each other.

3. Abutment (1) for the manufacturing of the internal structure of dental prostheses, according to claim 2 **characterized in that** the first section (4) of the coping (3) constitutes a skirt that fits the surface of the external face of the base (2) and wraps it in its perimeter.

4. Abutment (1) for the manufacturing of the internal structure of dental prostheses, according to claim 3 **characterized in that** the first section (4) has retention means (10) in its internal face which work collaboratively with reception means (11) arranged in the external face of the base (2) to allow the joining of the coping (3) to the base (2) and its later separation from it.

5. Abutment (1) for the manufacturing of the internal structure of dental prostheses, according to claim 4 **characterized in that** the retention means (10) and the reception means (11) allow the rotation of the coping (3) on the base (2) according to the horizontal plane defined by the connection on the implant or transepithelial pillar.

6. Abutment (1) for the manufacturing of the internal structure of dental prostheses, according to any of the preceding claims 4 to 5 **characterized in that** the retention means (10) comprise at least one protruding pivot (12) arranged on the internal face of the first section (4).

7. Abutment (1) for the manufacturing of the internal structure of dental prostheses, according to claim 6 **characterized in that** the reception means (11) comprise a notch (13) arranged in its perimeter on the external face of the base (2) on which the protruding pivot (12) moves.

8. Abutment (1) for the manufacturing of the internal structure of dental prostheses, according to claim 2 **characterized in that** the first section (4b) forms a funnel that fits the surface of the internal face of the base (2b) and wraps it in its perimeter.

9. Abutment (1) for the manufacturing of the internal structure of dental prostheses, according to claim 2 **characterized in that** the first section (4c) forms a claw (16) which is adapted to the screw (9) head and which is delimited in its perimeter by the upper edge of the base (2c).

10. Abutment (1) for the manufacturing of the internal structure of dental prostheses, according to claim 9 **characterized in that** the claw (16) is configured with a substantially semispherical shape, hollow inside, complementary to a screw (9) head which has a substantially spherical protuberance, allowing the fixing thereto by means of a slight pressure and the rotation of said claw (9) with respect to the screw (9).

11. Abutment (1) for the manufacturing of the internal structure of dental prostheses, according to claim 1 **characterized in that** the base (2, 2b, 2c) is integrated in the first section (4, 4b), so that the base (2, 2b) and the coping (3, 3b) constitute a single indivisible element.

12. Abutment (1) for the manufacturing of the internal structure of dental prostheses, according to any of the preceding claims 1 to 11 **characterized in that** the lower face of the base (2, 2c) has a circular connection (14) whose transepithelial pillar internal wall is bevelled defining a conical surface (15) which gradually closes between the connection opening (14) and the housing means (8).

## Patentansprüche

1. Abutment zur Herstellung der inneren Struktur von Zahnprothesen, wobei die genannten Prothesen von der Art sind, welche an Zahnimplantaten oder transephitelialen Stützen durch die Verwendung von Schrauben (9) befestigt wird, wobei das genannte Abutment (1) zwei funktionelle Teile hat, welche aus folgendem bestehen:
einem Boden (2, 2b, 2c), dessen untere Seite mit dem Implantat bzw.
transephitelialen Stützenkopf verbunden werden kann und in dessen Inneren sich Einhausungsmittel (8) für den Schraubenkopf (9) befinden; und
eine Zahnstumpfkappe (3, 3b, 3c), welche mit dem Boden (2, 2b, 2c) verbunden ist, durch welche das Prothesenloch gebildet wird, wobei ein Zugang zum Schraubenkopf (9) ermöglicht wird,
**dadurch gekennzeichnet, dass**
die Zahnstumpfkappe (3, 3b, 3c) folgendes umfasst:
einen ersten Abschnitt (4, 4b, 4c) zur Verbindung mit dem Boden (2, 2b, 2c);
einen zweiten gekrümmten Abschnitt (5), welcher mit dem ersten Abschnitt (4, 4b, 4c) verbunden ist;
und
einen dritten geraden Abschnitt (6), welcher mit dem zweiten Abschnitt (5) verbunden ist, dessen Neigungswinkel β bezüglich des Bodens (2, 2b, 2c) durch die Krümmung des zweiten Abschnitts (5) bestimmt ist.

2. Abutment (1) zur Herstellung der inneren Struktur von Zahnprothesen nach Anspruch 1, **dadurch gekennzeichnet, dass** der Boden (2, 2b, 2c) und die Zahnstumpfkappe (3, 3b, 3c) zwei separate Elemente bilden, welche voneinander lösbar sind.

3. Abutment (1) zur Herstellung der inneren Struktur von Zahnprothesen nach Anspruch 2, **dadurch gekennzeichnet, dass** der erste Abschnitt (4) der Zahnstumpfkappe (3) eine Schürze bildet, welche an die Oberfläche der Außenseite des Bodens (2) angepasst ist und diese umfänglich umgibt.

4. Abutment (1) zur Herstellung der inneren Struktur von Zahnprothesen nach Anspruch **3, dadurch gekennzeichnet, dass** der erste Abschnitt (4) Rückhaltemittel (10) an seiner Innenseite aufweist, welche mit Aufnahmemitteln (11) zusammenwirken, welche an der Außenseite des Bodens (2) angeordnet sind, um die Verbindung der Zahnstumpfkappe (3) mit dem Boden (2) und ihre spätere Trennung davon zu ermöglichen.

5. Abutment (1) zur Herstellung der inneren Struktur von Zahnprothesen nach Anspruch 4, **dadurch gekennzeichnet, dass** die Rückhaltemittel (10) und die Aufnahmemittel (11) die Drehung der Zahnstumpfkappe (3) auf dem Boden (2) gemäß der horizontalen Ebene, welche durch die Verbindung auf dem Implantat oder der transepithelialen Stütze bestimmt ist, zu ermöglichen.

6. Abutment (1) zur Herstellung der inneren Struktur von Zahnprothesen nach einem der vorherigen Ansprüche 4 bis 5, **dadurch gekennzeichnet, dass** die Rückhaltemittel (10) zumindest ein vorstehendes Drehgelenk (12) umfassen, das auf der Innenseite des ersten Abschnitts (4) angeordnet ist.

7. Abutment (1) zur Herstellung der inneren Struktur von Zahnprothesen nach Anspruch 6, **dadurch gekennzeichnet, dass** die Aufnahmemittel (11) eine Aussparung (13) umfassen, die umfänglich auf der Außenseite des Bodens (2) angeordnet ist, auf welcher sich das vorstehende Drehgelenk (12) bewegt.

8. Abutment (1) zur Herstellung der inneren Struktur von Zahnprothesen nach Anspruch 2, **dadurch gekennzeichnet, dass** der erste Abschnitt (4b) einen Trichter bildet, welcher an die Oberfläche der Innenseite des Bodens (2b) angepasst ist und diese umfänglich umgibt.

9. Abutment (1) zur Herstellung der inneren Struktur von Zahnprothesen nach Anspruch 2, **dadurch gekennzeichnet, dass** der erste Abschnitt (4c) einen Greifer (16) bildet, welcher an den Schraubenkopf (9) angepasst ist und welcher bezüglich seines Umfangs durch den oberen Rand des Bodens (2c) begrenzt ist.

10. Abutment (1) zur Herstellung der inneren Struktur von Zahnprothesen nach Anspruch 9, **dadurch gekennzeichnet, dass** der Greifer (16) mit einer im wesentlichen halbkugelförmigen Form, innen hohl, komplementär zu einem Schraubenkopf (9), welcher einen im wesentlichen kugelförmigen Vorsprung aufweist, ausgebildet ist, wobei eine Befestigung an letzterem durch einen leichten Druck und die Drehung des genannten Greifers (9) bezüglich der Schraube (9) ermöglicht ist.

11. Abutment (1) zur Herstellung der inneren Struktur von Zahnprothesen nach Anspruch 1, **dadurch gekennzeichnet, dass** der Boden (2, 2b, 2c) in dem ersten Abschnitt (4, 4b) integriert ist, so dass der Boden (2, 2b) und die Zahnstumpfkappe (3, 3b) ein einziges untrennbares Element bilden.

12. Abutment (1) zur Herstellung der inneren Struktur von Zahnprothesen nach einem der vorherigen Ansprüche 1 bis 11, **dadurch gekennzeichnet, dass** die Unterseite des Bodens (2, 2c) eine kreisförmige Verbindung (14) hat, deren innere Wand der transepithelialen Stütze abgeschrägt ist unter Bildung einer Kegelfläche (15), welche sich stufenweise zwischen der Verbindungsöffnung (14) und den Einhausungsmitteln (8) schließt.

## Revendications

1. Ajout pour la fabrication de la structure interne de prothèses dentaires, lesdites prothèses étant du type qui sont fixées sur des implants dentaires ou des piliers transépithéliaux par le biais de l'utilisation d'une vis (9), dans laquelle ledit ajout (1) a deux parties fonctionnelles constituées par :
une base (2, 2b, 2c) dont la face inférieure est connectable avec l'implant ou la tête du pilier transépithélial et à l'intérieur de laquelle se trouvent des moyens de logement (8) pour la tête de vis (9) ; et
une coiffe (3, 3b, 3c) reliée à la base (2, 2b, 2c) par le biais de laquelle l'orifice de la prothèse est établi permettant l'accès à la tête de vis (9) ;
**caractérisée en ce que :**
la coiffe (3, 3b, 3c) comprend :
une première section (4, 4b, 4c) à connecter à la base (2, 2b, 2c) ;
une deuxième section courbée (5) qui est connectée à la première section (4, 4b, 4c) ;
et
une troisième section droite (6) qui est connectée à la deuxième section (5), dont l'angle d'inclinaison β par rapport à la base (2, 2b, 2c) est déterminé par la courbure de la deuxième section (5) ;
où :
l'assemblage formé par la base (2, 2b, 2c) et la coiffe (3, 3b, 3c) définit une surface externe qui a une continuité uniforme.

2. Ajout (1) pour la fabrication de la structure interne de prothèses dentaires, selon la revendication 1 **caractérisée en ce que** la base (2, 2b, 2c) et la coiffe (3, 3b, 3c) constituent deux éléments indépendants détachables l'un de l'autre.

3. Ajout (1) pour la fabrication de la structure interne de prothèses dentaires, selon la revendication 2 **caractérisée en ce que** la première section (4) de la coiffe (3) constitue une jupe qui s'ajuste à la surface de la face externe de la base (2) et l'enveloppe dans son périmètre.

4. Ajout (1) pour la fabrication de la structure interne de prothèses dentaires, selon la revendication 3 **caractérisée en ce que** la première section (4) a des moyens de retenue (10) dans sa face interne qui travaillent conjointement avec des moyens de réception (11) disposés sur la face externe de la base (2) pour permettre la liaison de la coiffe (3) avec la base (2) et la séparation de cette dernière de celle-ci.

5. Ajout (1) pour la fabrication de la structure interne des prothèses dentaires, selon la revendication 4 **caractérisée en ce que** les moyens de retenue (10) et les moyens de réception (11) permettent la rotation de la coiffe (3) sur la base (2) selon le plan horizontal défini par la connexion sur l'implant ou le pilier transépithélial.

6. Ajout (1) pour la fabrication de la structure interne de prothèses dentaires, selon l'une quelconque des revendications précédentes 4 à 5 **caractérisée en ce que** les moyens de retenue (10) comprennent au moins un pivot en saillie (12) disposé sur la face interne de la première section (4).

7. Ajout (1) pour la fabrication de la structure interne de prothèses dentaires, selon la revendication 6 **caractérisée en ce que** les moyens de réception (11) comprennent une rainure (13) disposée dans son périmètre sur la face externe de la base (2) sur laquelle le pivot en saillie (12) se déplace.

8. Ajout (1) pour la fabrication de la structure interne de prothèses dentaires, selon la revendication 2 **caractérisée en ce que** la première section (4b) forme un cône qui s'ajuste à la surface de la face interne de la base (2b) et l'enveloppe dans son périmètre.

9. Ajout (1) pour la fabrication de la structure interne de prothèses dentaires, selon la revendication 2 **caractérisée en ce que** la première section (4c) forme une griffe (16) qui est adaptée à la tête de vis (9) et qui est délimitée dans son périmètre par le bord supérieur de la base (2c).

10. Ajout (1) pour la fabrication de la structure interne de prothèses dentaires, selon la revendication 9 **caractérisée en ce que** la griffe (16) est configurée avec une forme sensiblement hémisphérique, creuse à l'intérieur, complémentaire à une tête de vis (9) qui a une protubérance sensiblement sphérique, permettant la fixation à celle-ci au moyen d'une légère pression et la rotation de ladite griffe (9) par rapport à la vis (9).

11. Ajout (1) pour la fabrication de la structure interne de prothèses dentaires, selon la revendication 1 **caractérisée en ce que** la base (2, 2b, 2c) est intégrée à la première section (4, 4b) de sorte que la base (2, 2b) et la coiffe (3, 3b) constituent un seul élément indivisible.

12. Ajout (1) pour la fabrication de la structure interne de prothèses dentaires, selon l'une quelconque des revendications précédentes 1 à 11 **caractérisée en ce que** la face inférieure de la base (2, 2c) a une connexion circulaire (14) dont la paroi interne du pilier transépithélial est biseautée définissant une surface conique (15) qui se ferme graduellement entre l'ouverture (14) de la connexion et les moyens de logement (8).
